# EUROPÄISCHE PATENTSCHRIFT

(11) **EP 1 210 565 B1**
(45) Veröffentlichungstag und Bekanntmachung des Hinweises auf die Patenterteilung: **21.10.2015**
(21) Anmeldenummer: 01925299.8
(22) Anmeldetag: 26.02.2001
(51) Int. Cl.: G01F 15/08, G01F 1/684, G01F 15/12

(54) **VERWENDUNG EINES STRÖMUNGSGLEICHRICHTERS ALS KONDENSATIONSFALLE FÜR EINE FLÜSSIGKEIT IN EINER GASSTRÖMUNG**
USE OF A FLOW RECTIFIER AS A CONDENSATION TRAP FOR A LIQUID IN A GAS FLOW
UTILISATION D'UN RECTIFICATEUR D'ECOULEMENT COMME COLLECTEUR DE LIQUIDE DE CONDENSATION DANS UN ECOULEMENT GAZEUX

(30) Priorität: 26.02.2000 DE 10009153
(43) Veröffentlichungstag der Anmeldung: 05.06.2002
(73) Patentinhaber: ROBERT BOSCH GMBH, 70442 Stuttgart (DE)
(72) Erfinder: RILLING, Heinz, 71735 Eberdingen (DE); HUEFTLE, Gerhard, 71546 Aspach (DE); LENZING, Thomas, 71726 Benningen (DE); BEYRICH, Hans, 71691 Freiberg/N. (DE); MUELLER, Roland, 71711 Steinheim (DE); KONZELMANN, Uwe, 71679 Asperg (DE)
(86) Internationale Anmeldenummer: PCT/DE2001/000714
(87) Internationale Veröffentlichungsnummer: WO 2001/063220

(56) Entgegenhaltungen:
- DE-A- 2 845 662
- US-A- 4 412 449
- US-A- 4 774 833

## Beschreibung

### Stand der Technik

Die Erfindung geht aus von einer Vorrichtung zur Bestimmung von zumindest einem Parameter eines strömenden Gas-Füssigkeitsgemischs bzw. von der Verwendung eines Strömungsgleichrichters als Kondensationsfalle bzw. einem Verfahren zur Kondensierung einer Flüssigkeit nach der Gattung des Anspruchs 1 bzw. des Anspruchs 11 bzw. des Anspruchs 12.

Aus der EP 0 458 998 A1 ist eine Vorrichtung zur Bestimmung des Ansaugluftvolumens einer Brennkraftmaschine bekannt, wobei die Ansaugluft ein Messelement in einer Hauptströmungsrichtung umströmt. Dabei ist strömungsaufwärts des Messelements ein Strömungsgleichrichter vorhanden, der eine Vielzahl von Öffnungen hat.
Strömungsabwärts des Messelements befindet sich ein Gitter, das das Messelement von mechanischen Einwirkungen schützen soll, beispielsweise vor direktem Berühren mit der Hand.
Eine Maschenweite des Gitters ist speziell weitmaschig ausgefertigt.
Während des Betriebs der Vorrichtung kann es passieren, dass entgegen der Hauptströmungsrichtung in der Luftz.B. Öltröpfchen oder Öldampf mitströmt und das Messelement kontaminiert wird, was die Messeigenschaften deutlich verschlechtert.
Gründe für die Rückströmung von Flüssigkeiten sind z. B. pulsierende Strömungen oder der Nachlauf eines Turboladers in der Abstellphase. Das Schutzgitter, das speziell weitmaschig ausgeführt ist, reicht mit seiner Innenfläche nicht als Kondensationsfläche für die Flüssigkeit aus.
Aus der DE 196 47 081 A1 ist eine Vorrichtung zur Bestimmung des Volumens eines strömenden Mediums bekannt, bei dem ein Gitter Strömungsöffnungen besitzt, die zumindest bereichsweise einen unterschiedlichen Durchströmungsquerschnitt aufweisen. Das Gitter ist jedoch strömungsaufwärts des Messelements angeordnet.

Aus der de 28 45 662 A1 ist eine Vorrichtung gemäß dem Oberbegriff von Anspruch 1 bekannt.

### Vorteile der Erfindung

Die erfindungsgemässe Vorrichtung bzw. die erfindungsgemässe Verwendung des Strömungsgleichrichter als Kondensationsfalle bzw. das Verfahren zur Kondensierung einer Flüssigkeit mit den kennzeichnenden Merkmalen des Anspruchs 1 hat demgegenüber den Vorteil, dass auf einfache Art und Weise ein Messelement vor Kontaminationen geschützt wird.

Durch die in den abhängigen Ansprüchen 2 bis 9 aufgeführten Massnahmen sind vorteilhafte Weiterbildungen und Verbesserungen der im Anspruch 1 genannten Vorrichtung möglich.

Es ist vorteilhaft, als Kondensationsfalle strömungsabwärts des Messelements ein Element zu verwenden, das eine vergrösserte Innenfläche hat, weil dadurch auf einfache mechanische Art und Weise eine Kondensationsfalle erzielt wird.

Als Kondensationsfalle wird ein Strömungsgleichrichter verwendet, der durch kostengünstige und einfache Änderung auch als Kondensationsfalle dient. Eine vorteilhafte Ausführung der Vorrichtung der Kondensationsfalle besteht darin, die Kondensationsfalle in einem Rohrkörper zu integrieren, da dadurch der Fertigungsaufwand und die Anzahl der zu montierenden Teile reduziert wird.

Weiterhin vorteilhaft ist es, strömungsaufwärts des Messelements einen Strömungsgleichrichter zu verwenden, der für gute Strömungsbedingungen sorgt.

Für einen besonders guten Schutz des Messelements vor Flüssigkeit und Festkörperpartikel ist es vorteilhaft, ein Schutzgitter zumindest bereichsweise in den strömungsaufwärts des Messelements vorhandenen Strömungsgleichrichter zu integrieren.

Ein Schutzhalbrohr schirmt eine Öffnung eines Rohrkörpers vor Flüssigkeit und Festkörperpartikeln ab, so dass auf vorteilhafte Weise ein Schutzfunktion des Messelements erreicht wird.

### Zeichnung

Ausführungsbeispiele der Erfindung sind in der Zeichnung vereinfacht dargestellt und in der nachfolgenden Beschreibung näher erläutert.

Es zeigen
Figur 1 ein erstes Ausführungsbeispiel einer Vorrichtung zur Bestimmung von zumindest einem Parameter eines strömenden Gas-Füssigkeitsgemischs, und
die Figuren 2,3 und 4 weitere Ausführungsbeispiele der erfindungsgemässen Vorrichtung.

### Beschreibung der Ausführungsbeispiele

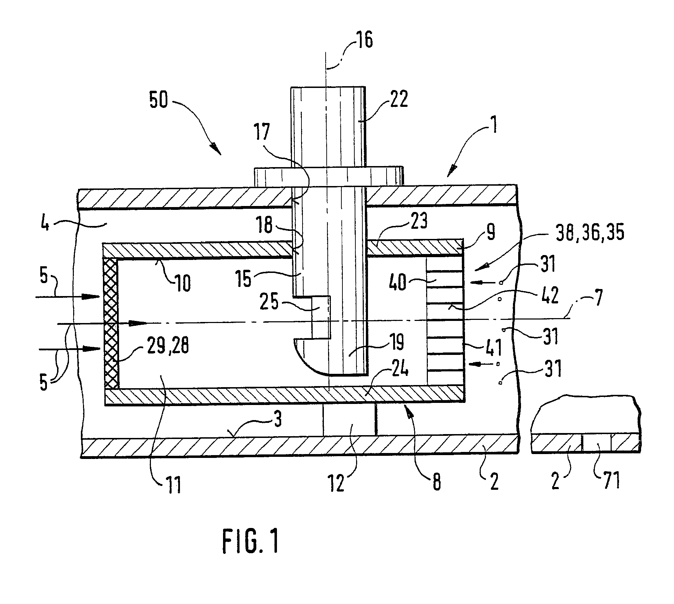

In der Figur 1 ist ein erstes Ausführungsbeispiel einer erfindungsgemäss ausgestalteten Vorrichtung 50 zur Bestimmung wenigstens eines Parameters eines in eine Leitung strömenden Gas-Füssigkeitsgemischs, insbesondere des Ansaugluftvolumens einer Brennkraftmaschine, in einer teilweisen Schnittdarstellung gezeigt, die sich auf die im Rahmen der Erfindung wesentlichen Elemente beschränkt. Dabei ist mit 1 eine Leitung bezeichnet, die einen direkten Abschnitt des Ansaugrohres der Brennkraftmaschine bilden kann, oder ein selbständiges Bauteil ist, das mit dem Saugrohr der Brennkraftmaschine verbindbar ist. Auf jeden Fall liegt die Leitung 1 stromabwärts eines nicht dargestellten Luftfilters auf dessen sogenannter Reinraumseite. Der Luftfilter dient zum Filtern der Ansaugluft der Brennkraftmaschine eines Kraftfahrzeuges und soll möglichst vollständig das Eindringen von Schmutzpartikeln oder Flüssigkeit in das Ansaugrohr verhindern.

Mit der Leitung 1 verbunden ist bspw. eine Kurbelgehäuseentlüftungsleitung 71. Öl aus dem Kurbelgehäuse der Brennkraftmaschine tritt gasförmig oder als feine Öltröpfchen infolge einer Entspannung des Öls im Kurbelgehäuse kontinuierlich durch die Kurbelgehäuseentlüftungsleitung in die Leitung ein. Dabei besteht die Gefahr, dass in unerwünschter Weise das Messelement 25 mit Ölpartikeln kontaminiert wird. Die Verschmutzung eines strömungsaufwärts gelegenen Messelements 25 erfolgt nur im geringen Masse während des Betriebes der Brennkraftmaschine, da wegen der hohen Strömungsgeschwindigkeit der Ansaugluft das Öl nicht in der Lage ist, sich strömungsaufwärts zu bewegen.

Wenn die Brennkraftmaschine ausser Betrieb ist, fehlt die Ansaugströmung und das sich entspannende Gas-Ölgemisch des Kurbelgehäuses kann sich in jede Richtung, also auch in Richtung des Messelements 25 ausbreiten und dieses kontaminieren.

Die Leitung 1 besitzt eine Leitungswandung 2, die eine Innenwand 3 hat, mit der sie den Strömungskanal 4 umschliesst, durch den in durch Pfeile gekennzeichneter Strömungsrichtung 5 die Ansaugluft der Brennkraftmaschine strömt. In der Leitung 1 ist ein Rohrkörper 8 angeordnet, der in Strömungsrichtung 5 ausgerichtet ist und beispielsweise konzentrisch zur Leitungsmittellinie 7 der Leitung 1 verläuft. Der Rohrkörper 8 weist eine Wandung 9 auf, die mit einer Innenkanalwand 10 einen Durchströmkanal 11 in dem Rohrkörper 8 begrenzt, über den ein Teil der in Strömungsrichtung 5 angesaugten Luft strömt. Gehalten wird der Rohrkörper 8 beispielsweise durch wenigstens zwei Streben 12, die sich zwischen der Innenwand 3 der Leitung 1 und der Wandung 9 des Rohrkörpers 8 quer zur Strömungsrichtung 5 erstrecken und dabei eine flache, plattenförmige Form haben. Die Streben 12 bewirken ausser der Halterung des Rohrkörpers 8 in der Luftströmung zwischen der Leitung 1 und dem Rohrkörper 8 eine Erhöhung des Druckabfalls, so dass sich die durch den Durchströmkanal 11 strömende Luftmenge erhöht, und zum anderen bewirken die Streben 12 in gewollter Weise eine Gleichrichtung der Ansaugluftströmung.

Das von der Brennkraftmaschine angesaugte Luftvolumen ist durch eine nicht dargestellte, stromabwärts des Rohrkörpers 8 in dem Ansaugrohr der Brennkraftmaschine angeordnete Drosselklappe willkürlich veränderbar. Ein zu messender Parameter des strömenden Gas-Füssigkeitsgemischs kann das pro Zeiteinheit strömende Volumen (Volumenstrom) des strömenden Gas-Füssigkeitsgemischs sein, beispielsweise das Ansaugluftvolumen einer Brennkraftmaschine. Zur Ermittlung des Ansaugluftvolumens der Brennkraftmaschine ist ein Messkörper 15 vorgesehen, der im wesentlichen länglich und quaderförmig ausgebildet ist und sich entlang einer Längsachse 16 erstreckt. Die Längsachse 16 verläuft im wesentlichen senkrecht zur Leitungsmittellinie 7 und damit auch zur Strömungsrichtung 5. Der Messkörper 15 ist teilweise durch eine Halteöffnung 17 in der Leitungswandung 2 und eine Einstecköffnung 18 in der Wandung 9 des Rohrkörpers 8 eingesteckt und ragt mit einem Messende 19 in den Durchströmkanal 11. Ein die elektrischen Anschlüsse, beispielsweise in Form von Steckerzungen, aufnehmendes Steckerende 22 des Messkörpers 15 verbleibt dabei ausserhalb der Leitung 1. Die Einstecköffnung 18 des Rohrkörpers 8 ist in einem ersten Wandabschnitt 23 ausgebildet dem gegenüber in Richtung der Längsachse 16 ein zweiter Wandabschnitt 24 des Rohrkörpers liegt. Im Messende 19 des Messkörpers 15 ist in bekannter Weise zumindest ein Messelement 25 vorgesehen, das mit der den Durchströmkanal 11 durchströmenden Luft in Kontakt steht und mittels dem die von der Brennkraftmaschine angesaugte Luftmasse bestimmt wird. Das Messelement 25 kann in bekannter Weise z.B. in Form von thermisch gekoppelten, temperaturabhängigen Widerständen ausgebildet sein. Insbesondere ist es möglich, wie beispielsweise in der DE 43 38 891 A1 gezeigt wird, das Messelement 25 als mikromechanisches Bauteil auszubilden, welches eine dielektrische Membran aufweist, auf welcher die Widerstandselemente ausgebildet sind.

Andere zu messende Parameter des strömenden Gas-Füssigkeitsgemischs sind beispielsweise deren Temperatur, Druck u. ä.. Die Messelemente 25 können hierfür z.B. so ausgebildet sein wie sie in der DE 42 37 224 A1, DE 43 17 312 A1, DE 197 11 939 A1 oder DE 197 31 420 A1 gezeigt sind.

Um zu verhindern, dass das Messelement 25 in unerwünschter Weise mit Schmutzpartikeln oder Flüssigkeit beaufschlagt wird, ist zumindest teilweise stromaufwärts des Messelements 25 bspw. innerhalb des Durchströmkanals 11 des Rohrkörpers 8 ein erste Schutzlement 28, bspw. ein Schutzsieb 29 angeordnet. Dieses Schutzsieb 29 kann beispielsweise aus Kunststoff geformt werden und bspw. in dem Rohrkörper 8 oder in der Leitung 1 integriert sein. Dies geschieht bspw. dadurch, dass das Schutzsieb 29 und der Rohrkörper 8 in einem Spritzvorgang hergestellt werden. Weitere Ausführungsmöglichkeiten des Schutzsiebs sind möglich.

Wie weiter oben schon erläutert, gelangen aus der Hauptströmungsrichtung 5 entgegen der Strömungsrichtung Flüssigkeiten und Partikel auf das Messelement 25, insbesondere wenn die Ansaugströmung fehlt. Durch die Anordnung zumindest einer Kondensationsfalle 36 wird dies verhindert. Die Kondensationsfalle 36 kann bspw. ein Teilstück des Strömungskanals 4 sein, das aktiv gekühlt wird, wodurch Flüssigkeiten kondensieren.
Als Kondensationsfalle 36 kann auch ein Element 35 dienen, das eine vergrösserte Innenfläche zur Verfügung stellt und so die Kondensation einer Flüssigkeit begünstigt, wie z.B. ein Sieb.

Strömungsabwärts des Messelements 25 im Rohrkörper 8 ist beispielsweise ein Strömungsgleichrichter 38 bekannter Bauart angeordnet, der sich quer zur Strömungsrichtung 5 durch den Durchströmkanal 11 des Rohrkörpers 8 erstreckt und dazu dient, eine möglichst gleichmässige Luftströmung an und um das Messelement 25 zu gewährleisten. Für die Verwendung als Kondensationsfalle 36 ist der Strömungsgleichrichter 38 gegenüber dem Stand der Technik in Strömungsrichtung etwas länger ausgeführt, z.B. zwei Zentimeter oder hat mehr Gleichrichterkanäle 40.
Der Strömungsgleichrichter 38 besteht aus vielen Gleichrichterkanälen 40, die Innenflächen 42 haben. Durch diese Innenflächen 42 wird beispielsweise dem Öldampf bzw. der Ölfeuchte zum einen eine deutlich grössere Kondensationsfläche zur Verfügung gestellt als die bislang lediglich vorhandene Innenwandkanal 10. Zum anderen befindet sich die Kondensationsfläche über den gesamten Strömungsquerschnitt des Rohrkörpers 8 verteilt, so dass Öl kaum noch den Strömungsgleichrichter 38 passiert und das Messelement 25 somit wesentlich weniger verschmutzt.

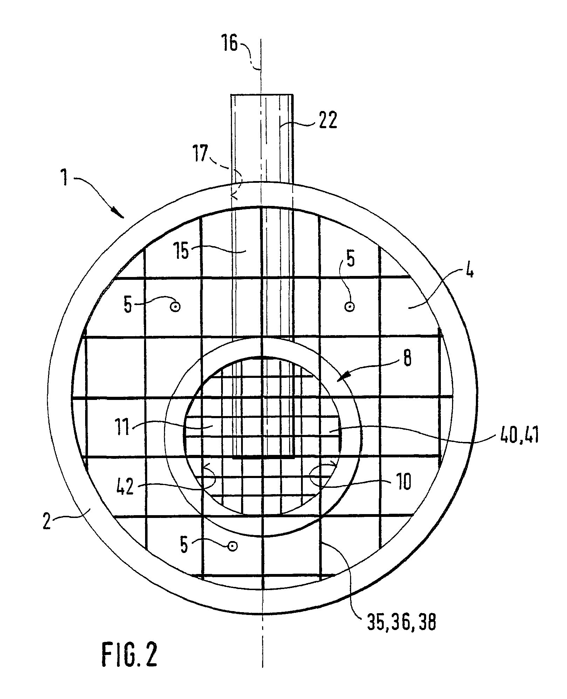

Figur 2 zeigt ein weiteres Ausführungsbeispiel der erfindungsgemässen Vorrichtung 50.
Für gleiche oder gleichwirkende Teile werden in den folgenden Figurenbeschreibungen die gleichen Bezugszeichen wie in den vorherigen Figuren verwendet.
Der Strömungsgleichrichter 38 dehnt sich über den Rohrkörper 8 hinaus und erstreckt sich bspw. bis zur Innenwandung 3 der Leitung 2. In diesem Beispiel wird ein Strömungsgleichrichter 38 verwendet, der Gleichrichterkanäle 40 mit unterschiedlichen Durchströmungsquerschnitten, bspw. in einer Ebene, die senkrecht zur Mittellinie 7 steht und parallel zur Steckachse 16 verläuft, hat.
Im Bereich des Rohrkörpers 8 sind die Gleichrichterkanäle 40 so ausgelegt, dass gegenüber dem Stand der Technik vergrösserte Kondensationsfläche zur Verfügung stehen. Im Bereich um den Rohrkörper 8 herum ist die Weite der Gleichrichterkanäle 40 mit Öffnungen 41 so gross, dass die Strömung nicht merklich beeinflusst wird. Gleichzeitig kann der Strömungsgleichrichter 38 mit dem Rohrkörper 8 und der Leitungswand 2 integriert sein, so dass der Strömungsgleichrichter 38 die Funktion der Streben 12 übernimmt.

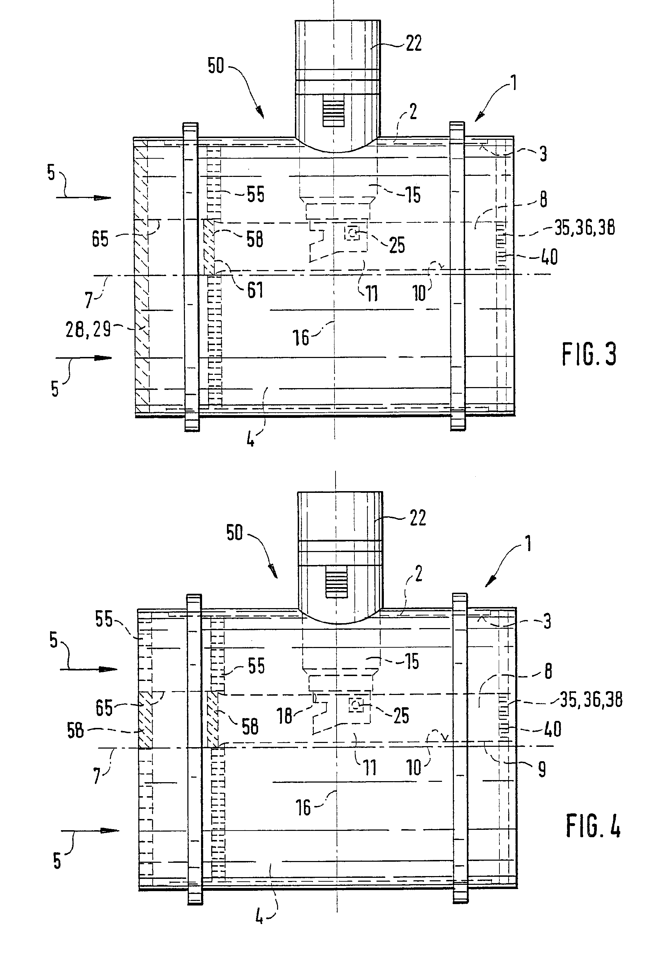

Figur 3 zeigt ein weiteres Ausführungsbeispiel der erfindungsgemässen Vorrichtung.
Das Schutzgitter 29 erstreckt sich strömungsaufwärtig des Messelements 25 und des Rohrkörpers 8 über den ganzen Querschnitt des Strömungskanals 4.
Auf der Höhe einer Eingangsöffnung 61 des Durchströmkanals 11 des Rohrkörpers 8, also strömungsabwärts des Schutzgitters 29 ist zumindest ein zweiter Strömungsgleichrichter 55 angeordnet. In diesem Beispiel ist nur ein zweiter Strömungsgleichrichter 55 vorhanden.
In dem zweiten Strömungsgleichrichter 55 ist bspw. ein zweites Schutzelement 58, das zur Reduzierung der Beaufschlagung des Messelements 25 mit Flüssigkeit oder Festkörperpartikeln dient, so integriert, dass es den ganzen Querschnitt der Eingangsöffnung 61 abdeckt und direkt an der Eingangsöffnung 61 anliegt. Das zweite Schutzelement 58 kann bspw. wieder ein Schutzgitter sein.
Ein Schutzhalbrohr 65 schliesst sich strömungsaufwärtig direkt an die Öffnung 61 an und verläuft in axialer Richtung bis zu dem Schutzgitter 29. Das Schutzhalbrohr 65 ist dabei so orientiert, dass auf seine Aussenfläche Flüssigkeiten und Festkörperpartikel treffen, die von dem Schutzgitter 29 aus zur Eingangsöffnung 61 hin strömen, so dass diese nicht in den Rohrkörper 8 gelangen und auf das Messelement 25 treffen können.

Figur 4 zeigt ein weiteres Ausführungsbeispiel der erfindungsgemässen Vorrichtung.
Im Gegensatz zur Figur 3 ist das Schutzgitter 29 der Figur 3 als ein weiterer zweiter Strömungsgleichrichter 55, in dem bereichsweise ein zweites Schutzelement 58 integriert ist, ausgebildet.
Das zweite Schutzelement 58 deckt in Hauptströmungsrichtung 5 gesehen die Eingangsöffnung 61 des Rohrkörpers 8 fluchtend ab.

Die Anordnungen nach Figur 3 und 4 gewährleisten einen deutlich höheren Abweisungsgrad von Flüssigkeit und Festkörperpartikeln und garantieren eine längere Lebensdauer des Messelements 25, z.B. eine längere Kilometer-Gewährleistung eines Luftvolumenmessers einer Verbrennungsmaschine eines Kraftfahrzeugs.
Der Messkörper 15, der Rohrkörper 8, die Leitung 1, der Schutzhalbring 65 oder die Strömungsgleichrichter 38, 55 sowie weitere Teile der Vorrichtung können bspw. aus Kunststoff oder Metall sein.

## Patentansprüche

1. Vorrichtung zur Bestimmung von zumindest einem Parameter, insbesondere eines Massenstroms, eines in einer Leitung (4) strömenden Gas-Füssigkeitsgemischs, insbesondere einer Ansaugluft einer Brennkraftmaschine, bestehend aus Gasteilchen und zumindest einer Flüssigkeit, wobei in der Leitung (4) in einem Messkörper (15) ein vom Gas-Füssigkeitsgemisch umströmtes Messelement (25) angeordnet ist und strömungsabwärts des Messelements (25) ein Strömungsgleichrichter (38) als eine Kondensationsfalle (36) für die zumindest eine Flüssigkeit (31) angeordnet ist,
**dadurch gekennzeichnet, dass** sich in der Leitung (4) ein von dem Gas-Füssigkeitsgemisch durchströmter Rohrkörper (8) erstreckt, der eine von einer Innenwand (3) der Leitung (4) beabstandete Wandung (9) aufweist und einen Durchströmkanal (11) hat, dass der Messkörper (15) mit einem das Messelement (25) aufweisenden Messende (19) durch eine Öffnung (18) des Rohrkörpers (8) in den Durchströmkanal (11) ragt und dass der Strömungsgleichrichter (38) stromabwärts des Messelements (15) im Bereich des Rohrkörpers (8) als Kondensationsfalle (36) ausgebildet ist und um den Rohrkörper (8) herum die Strömung nicht merklich beeinflusst.

2. Vorrichtung nach Anspruch 1,
**dadurch gekennzeichnet, dass**
die Kondensationsfalle (36) ein Element (35) ist, das eine vergrösserte Innenfläche in der Leitung (4) zur Verfügung stellt.

3. Vorrichtung nach Anspruch 1 oder 2,
**dadurch gekennzeichnet, dass**
die Kondensationsfalle (36) in dem Rohrkörper (8) integriert ist.

4. Vorrichtung nach Anspruch 1,
**dadurch gekennzeichnet,**
**dass** der Strömungsgleichrichter (38) Gleichrichterkanäle (40) hat, dass Gleichrichterkanäle (40) des Strömungsgleichrichters (38) zumindest bereichsweise einen unterschiedlichen Durchströmungsquerschnitt aufweisen.

5. Vorrichtung nach Anspruch 1,
**dadurch gekennzeichnet, dass**
in der Leitung (4,11) strömungsaufwärts des Messelements (25) zumindest ein erstes Schutzelement (28) angeordnet ist, das zur Reduzierung der Beaufschlagung des Messelements (25) mit Flüssigkeit oder Festkörperpartikeln dient.

6. Vorrichtung nach Anspruch 5,
**dadurch gekennzeichnet, dass**
als erstes Schutzelement (28) zur Reduzierung der Beaufschlagung des Messelements (25) mit Flüssigkeit oder Festkörperpartikeln sich ein Schutzgitter (29) in der Leitung (4) oder in dem Rohrkörper (8) befindet.

7. Vorrichtung nach Anspruch 1,
**dadurch gekennzeichnet, dass**
in der Leitung (4) strömungsaufwärts des Messelements (25) zumindest ein zweiter Strömungsgleichrichter (55) angeordnet ist.

8. Vorrichtung nach Anspruch 5 und 7,
**dadurch gekennzeichnet, dass**
der zweite Strömungsgleichrichter (55) zumindest bereichsweise ein zweites Schutzelement (58) aufweist, das zur Reduzierung der Beaufschlagung des Messelements (25) mit Flüssigkeit oder Festkörperpartikeln dient.

9. Vorrichtung nach den Ansprüchen 1 und 6,
**dadurch gekennzeichnet,**
**dass** der Rohrkörper (8) eine Eingangsöffnung (61) in Hauptströmungsrichtung (5) hat,
**dass** sich strömungsaufwärts der Eingangsöffnung (61) des Rohrkörpers (8) zumindest ein Schutzhalbrohr (65) bis zu dem Schutzgitter (29) erstreckt und dabei so orientiert ist, dass auf seine Außenfläche Flüssigkeiten und Festkörperpartikel treffen, die von dem Schutzgitter (29) aus zur Eingangsöffnung (61) hin strömen, so dass diese nicht in den Rohrkörper (8) gelangen.

## Claims

1. Device for determining at least one parameter, in particular a mass flow rate, of a gas-liquid mixture flowing in a line (4), in particular intake air of a combustion engine, consisting of gas particles and at least one liquid, wherein in the line (4) there is arranged, in a measurement body (15), a measurement element (25) around which flows the gas-liquid mixture, and downstream of the measurement element (25) there is arranged a flow rectifier (38) as a condensation trap (36) for the at least one liquid (31),
**characterized in that** in the line (4) there extends a tubular body (8) through which flows the gas-liquid mixture and which has a wall (9) at a distance from an inner wall (3) of the line (4) and a flow duct (11), **in that** the measurement body (15) projects, with a measurement end (19) having the measurement element (25), through an opening (18) of the tubular body (8) into the flow duct (11), and **in that** the flow rectifier (38) is formed as a condensation trap (36) downstream of the measurement element (15) in the region of the tubular body (8) and has no appreciable effect on the flow around the tubular body (8).

2. Device according to Claim 1,
**characterized in that**
the condensation trap (36) is an element (35) which provides an increased internal surface in the line (4).

3. Device according to Claim 1 or 2,
**characterized in that**
the condensation trap (36) is integrated into the tubular body (8).

4. Device according to Claim 1,
**characterized**
**in that** the flow rectifier (38) has rectifier ducts (40), and
**in that** rectifier ducts (40) of the flow rectifier (38) have, at least in certain regions, a different flow cross section.

5. Device according to Claim 1,
**characterized in that**
in the line (4, 11), upstream of the measurement element (25), there is arranged at least one first protection element (28) which serves to reduce the quantity of liquid or solid particles impinging on the measurement element (25).

6. Device according to Claim 5,
**characterized in that**
as first protection element (28) for reducing the quantity of liquid or solid particles impinging on the measurement element (25), a protective screen (29) is located in the line (4) or in the tubular body (8).

7. Device according to Claim 1,
**characterized in that**
in the line (4), upstream of the measurement element (25), there is arranged at least one second flow rectifier (55).

8. Device according to Claims 5 and 7,
**characterized in that**
the second flow rectifier (55) has, at least in certain regions, a second protection element (58) which serves to reduce the quantity of liquid or solid particles impinging on the measurement element (25).

9. Device according to Claims 1 and 6,
**characterized**
**in that** the tubular body (8) has an inlet opening (61) in the main flow direction (5),
and **in that**, upstream of the inlet opening (61) of the tubular body (8), there extends, as far as the protective screen (29), at least one protective half tube (65) which is then oriented such that liquids and solid particles hit its outer surface and flow from the protective screen (29) toward the inlet opening (61), such that they do not enter into the tubular body (8).

## Revendications

1. Ensemble de détermination d'au moins un paramètre, en particulier du débit massique, d'un mélange de gaz et de liquide qui s'écoule dans un conduit (4), en particulier de l'air aspiré par un moteur à combustion interne, constitué de particules de gaz et d'au moins un liquide,
un élément de mesure (25) étant disposé dans un corps de mesure (15) placé dans le conduit (4) et un redresseur d'écoulement (38) configuré comme piège (36) à condensats du ou des liquides (31) étant disposé en aval de l'élément de mesure (25) dans la direction d'écoulement,
**caractérisé en ce que**
un corps tubulaire (8) traversé par le mélange de gaz et de liquide, qui présente une paroi (9) située à distance d'une paroi intérieure (3) du conduit (4) et qui possède un canal d'écoulement (11) s'étend dans le conduit (4),
**en ce que** par une extrémité de mesure (19) présentant l'élément de mesure (25), le corps de mesure (15) déborde dans le canal d'écoulement (11) à travers une ouverture (18) du corps tubulaire (8) et
**en ce que** le redresseur (38) d'écoulement est configuré comme piège (36) à condensats au niveau du corps tubulaire (8) en aval de l'élément de mesure (15) dans la direction d'écoulement et n'influence pas notablement l'écoulement autour du corps tubulaire (8).

2. Ensemble selon la revendication 1, **caractérisé en ce que** le piège (36) à condensats est un élément (35) qui présente une surface intérieure agrandie dans le conduit (4).

3. Ensemble selon les revendications 1 ou 2, **caractérisé en ce que** le piège (36) à condensats est intégré dans le corps tubulaire (8).

4. Ensemble selon la revendication 1, **caractérisé en ce que** le redresseur d'écoulement (38) présente des canaux redresseurs (40) et **en ce que** les canaux redresseurs (40) du redresseur d'écoulement (38) présentent des sections transversales d'écoulement différentes au moins par parties.

5. Ensemble selon la revendication 1, **caractérisé en ce qu'**au moins un premier élément de protection (28) qui sert à réduire la quantité de liquide ou de particules solides qui aboutissent sur l'élément de mesure (25) est disposé dans le conduit (4, 11) en amont de l'élément de mesure (25) dans la direction d'écoulement.

6. Ensemble selon la revendication 5, **caractérisé en ce que** comme premier élément de protection (28) destiné à réduire la quantité de liquide ou de particules solides aboutissant sur l'élément de mesure (25), une grille de protection (29) est placée dans le conduit (4) ou dans le corps tubulaire (8).

7. Ensemble selon la revendication 1, **caractérisé en ce qu'**au moins un deuxième redresseur d'écoulement (55) est disposé dans le conduit (4) en amont de l'élément de mesure (25) dans la direction d'écoulement.

8. Ensemble selon les revendications 5 et 7, **caractérisé en ce que** le deuxième redresseur d'écoulement (55) présente au moins dans certaines parties un deuxième élément de protection (58) qui sert à réduire la quantité de liquide ou de particules solides qui aboutissent sur l'élément de mesure (25).

9. Ensemble selon les revendications 1 et 6, **caractérisé en ce que** le corps tubulaire (8) possède une ouverture d'entrée (61) dans la direction principale d'écoulement (5) et **en ce qu'**au moins un demi-tube de protection (65) s'étend jusqu'à la grille de protection (29) en amont de l'ouverture d'entrée (61) du corps tubulaire (8) dans la direction d'écoulement et est orienté de telle sorte que les liquides et les particules solides qui s'écoulent vers l'ouverture d'entrée (61) en provenance de la grille de protection (29) viennent frapper sa surface extérieure de manière à ne pas pénétrer dans le corps tubulaire (8).
